# EUROPEAN PATENT APPLICATION

(11) **EP 4 691 599 A2**
(43) Date of publication of application: **11.02.2026**
(21) Application number: 25190452.0
(22) Date of filing: 18.07.2025
(51) Int. Cl.: B01D 53/04

(54) **HAZARDOUS GAS DIRECT AIR CAPTURE MODULE AND SYSTEM**

(30) Priority: 19.07.2024 US 202418777903
(71) Applicant: GE Vernova Technology GmbH, 5400 Baden (CH)
(72) Inventor: HARIKRISHNAN, Murali Shri, 560066 Bangalore (IN); PUJAHARI, Ankita, 560066 Bangalore (IN); DE, Anindya Kanti, 560066 Bangalore (IN); PAL, Subrata, 560066 Bangalore (IN); MODELSKI, Szymon Pawel, 5400 Baden (CH)
(74) Representative: Freigutpartners IP Law Firm

(57) **Abstract**

A hazardous gas direct air capture (DAC) module includes a frame enclosing a plurality of hazardous gas capture contactors, and a first air mover configured to draw air into an inlet side of the frame and over the plurality of hazardous gas capture contactors to remove hazardous gas from the air, producing clean air. The DAC module also includes a flow director operatively coupled to the frame and configured to direct the clean air exiting the outlet side of the frame away from the frame to reduce re-entry of the clean air into the inlet side of the frame. A DAC system includes set(s) of DAC modules with each set including a first plurality of DAC modules arranged in a first line, and a second plurality of DAC modules arranged in a second line parallel to the first line. The module/system reduce clean air recirculation and more efficient.

## Description

### TECHNICAL FIELD

The disclosure relates generally to hazardous gas direct air capture systems. More specifically, the disclosure relates to a hazardous direct air capture module and system having an arrangement of modules and module structure to reduce clean air recirculation and improve efficiency.

### BACKGROUND

Hazardous gas direct air capture uses modules to capture a hazardous gas, such as carbon dioxide (CO₂), from air. The process is also known as direct air capture (DAC). DAC modules typically include a mechanism to draw air into an inlet side of the module and over hazardous gas absorbing surfaces therein. The 'clean air' depleted of the hazardous gas exits the DAC modules from an opposing outlet side. DAC modules in a DAC system are typically arranged in an angular or staggered fashion. Preventing re-entry or recirculation of clean air from the outlet side to the inlet side of the DAC module(s) presents a challenge to efficient operation of DAC modules and systems. The re-entry of air reduces the hazardous gas capture efficiency of the DAC module or system by reducing the amount of hazardous gas captured per unit time and/or per system. The re-entry challenge may lead to the need for more DAC modules in a particular system which disadvantageously increases the footprint of the system.

### BRIEF DESCRIPTION

All aspects, examples and features mentioned below can be combined in any technically possible way.

An aspect of the disclosure provides a direct air capture (DAC) module, comprising: a frame enclosing a plurality of hazardous gas capture contactors; a first air mover configured to draw air into an inlet side of the frame and over the plurality of hazardous gas capture contactors to remove hazardous gas from the air, producing clean air; and a flow director operatively coupled to the frame and configured to direct the clean air exiting an outlet side of the frame away from the frame to reduce re-entry of the clean air into the inlet side of the frame.

Another aspect of the disclosure includes any of the preceding aspects, and the flow director includes a flow guide member extending from the outlet side of the frame.

Another aspect of the disclosure includes any of the preceding aspects, and the flow guide member is configured to interact with the flow guide member of an adjacent DAC module to accelerate a flow of clean air therebetween to direct the clean air exiting the outlet side of the frames vertically away from the frames to reduce re-entry of the clean air into the inlet side of the frame.

Another aspect of the disclosure includes any of the preceding aspects, and the flow director includes at least one second air mover having a flow direction away from the frame to reduce re-entry of the clean air into the inlet side of the frame.

Another aspect of the disclosure includes any of the preceding aspects, and the flow director directs the clean air exiting the outlet side of the frame vertically away from the frame.

Another aspect of the disclosure includes any of the preceding aspects, and further comprising an exterior wall enclosing a lowermost portion of the frame and preventing air flow therethrough, the exterior wall extending from a surface upon which the frame is supported.

Another aspect of the disclosure includes any of the preceding aspects, and further comprising a curved ramp extending from a surface upon which the frame is supported toward the inlet side of the frame, the curved ramp directing air flow drawn by the first air mover along the inlet side of the frame.

Another aspect of the disclosure includes any of the preceding aspects, and further comprising a gap filler member extending from a side of the frame, the gap filler member configured to coupled to the frame of an adjacent DAC module to block air flow between the DAC modules.

Another aspect of the disclosure includes any of the preceding aspects, and the hazardous gas includes carbon dioxide.

Another aspect of the disclosure includes a direct air capture (DAC) system, comprising: at least one set of direct air capture (DAC) modules, each set including: a first plurality of DAC modules arranged in a first line; a second plurality of DAC modules arranged in a second line, wherein the first line is parallel to the second line; and a gap filler member blocking air flow through a space between each pair of adjacent DAC modules in the first plurality of DAC modules and through a space between each pair of adjacent DAC modules in the second plurality of DAC modules.

Another aspect of the disclosure includes any of the preceding aspects, and the at least one set includes at least two sets with the at least two sets arranged in parallel lines.

Another aspect of the disclosure includes any of the preceding aspects, and the at least two sets arranged in parallel lines are also arranged to be substantially parallel to a predominate wind direction in a location of the at least two sets.

Another aspect of the disclosure includes any of the preceding aspects, and each DAC module includes: a frame enclosing a plurality of hazardous gas capture contactors; and a first air mover configured to draw air into an inlet side of the frame and over the plurality of hazardous gas capture contactors to remove hazardous gas from the air, producing clean air.

Another aspect of the disclosure includes any of the preceding aspects, and each DAC module further includes a flow director operatively coupled to the frame and configured to direct the clean air exiting the outlet side away from the frame to reduce re-entry of the clean air into the inlet side of the frame.

Another aspect of the disclosure includes any of the preceding aspects, and the flow director includes a flow guide member extending from the outlet side of the frame, wherein the flow guide member is configured to interact with the flow guide member of an adjacent DAC module to accelerate a flow of clean air therebetween to direct the clean air exiting the outlet side of the frames vertically away from the frames to reduce re-entry of the clean air into the inlet side of the frames.

Another aspect of the disclosure includes any of the preceding aspects, and the flow director includes at least one second air mover having a flow direction away from the frame to reduce re-entry of the clean air into the inlet side of the frame.

Another aspect of the disclosure includes any of the preceding aspects, and the flow director directs the clean air exiting the outlet side of the frame vertically away from the frame.

Another aspect of the disclosure includes any of the preceding aspects, and each DAC module further includes an exterior wall enclosing a lowermost portion of the frame and preventing air flow therethrough, the exterior wall extending from a surface upon which the frame is supported.

Another aspect of the disclosure includes any of the preceding aspects, and each DAC module further includes a curved ramp extending from a surface upon which the frame is supported toward the inlet side of the frame, the curved ramp directing air flow drawn by the first air mover along the inlet side of the frame.

Another aspect of the disclosure includes any of the preceding aspects, and less than 10% of incoming air to the at least one set of DAC modules recirculates to the plurality of DAC modules.

Another aspect of the disclosure includes any of the preceding aspects, and less than 4% of incoming air to the at least one set of DAC modules recirculates to the plurality of DAC modules.

Another aspect of the disclosure includes any of the preceding aspects, and the hazardous gas includes carbon dioxide.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a perspective view of a prior art direct air capture (DAC) module;
FIG. 2 shows a top-down view of a prior art arrangement of DAC modules;
FIG. 3 shows a top-down view of another prior art arrangement of DAC modules;
FIG. 4 shows an outlet side, perspective view of a direct air capture (DAC) module according to embodiments of the disclosure;
FIG. 5 shows an inlet side, perspective view of a DAC module according to other embodiments of the disclosure;
FIG. 6 shows an end schematic view of the DAC module of FIG. 5;
FIG. 7 shows an outlet side, perspective view of a DAC module according to additional embodiments of the disclosure;
FIG. 8 shows an end schematic view of the DAC module of FIG. 7;
FIG. 9 shows a top-down view of a set of a plurality of DAC modules for a DAC system according to embodiments of the disclosure;
FIG. 10 shows a top-down view of a DAC system including at least one set of a plurality of DAC modules according to embodiments of the disclosure;
FIG. 11 shows an end schematic view of a DAC system including sets of a plurality of the DAC modules of FIG. 4;
FIG. 12 shows an end schematic view of a DAC system including sets of a plurality of the DAC modules of FIGS. 5-6; and
FIG. 13 shows an end schematic view of a DAC system including sets of a plurality of the DAC modules of FIGS. 7-8.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant components within the illustrative application of a direct air capture system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as air through a direct air capture module or, for example, the flow of air through direct air capture system including set(s) of hazardous gas direct air capture modules. The term "downstream" corresponds to the direction of flow of the fluid, and the term "upstream" refers to the direction opposite to the flow.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on,'' "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include a hazardous gas direct air capture (DAC) module including a frame enclosing a plurality of hazardous gas capture contactors, and a first air mover configured to draw air into an inlet side of the frame and over the plurality of hazardous gas capture contactors to remove hazardous gas from the air, producing clean air. The DAC module also includes a flow director operatively coupled to the frame. The flow director directs the clean air exiting the outlet side of the frame away from the frame to reduce re-entry of the clean air into the inlet side of the frame. A DAC system includes set(s) of DAC modules with each set including a first plurality of DAC modules arranged in a first line, and a second plurality of DAC modules arranged in a second line parallel to the first line. The DAC system may include gap filler members between adjacent DAC modules to prevent air from re-entry into the inlet side of the DAC modules. The module and systems reduce clean air recirculation and are more efficient than conventional versions.

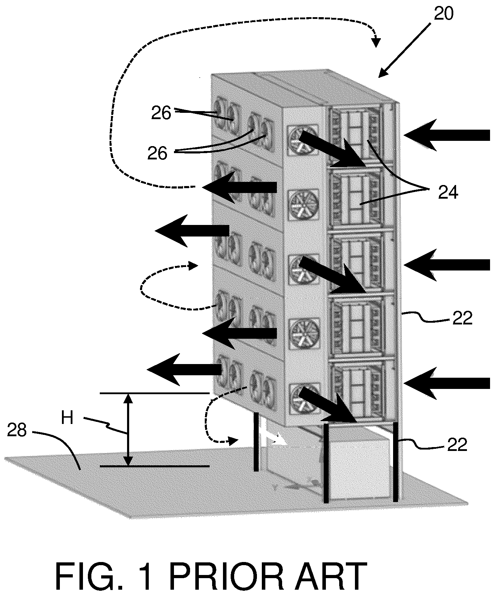

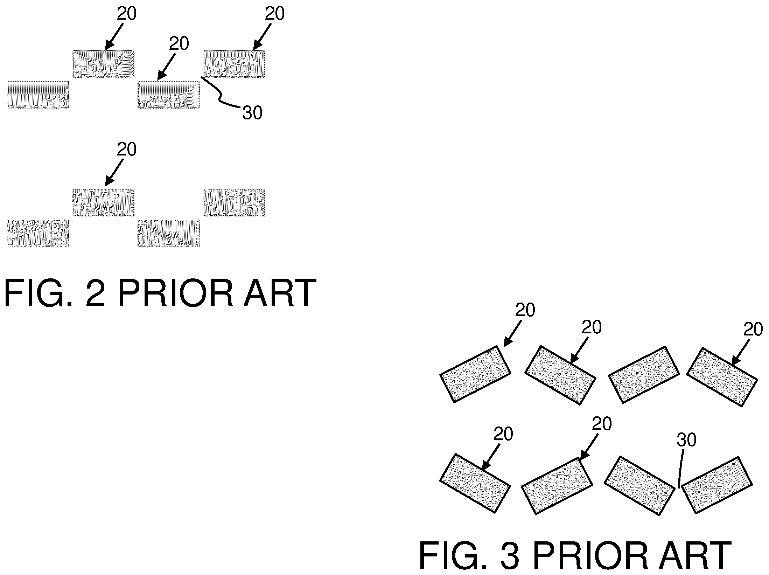

FIG. 1 shows a perspective view of a prior art direct air capture (DAC) module 20. The DAC module 20 includes a frame 22 including a plurality of hazardous gas capture contactors 24. A plurality of fans 26 pull air over contactors 24 to remove hazardous gas from an air flow (large black arrows). As shown in FIGS. 2 and 3, conventional DAC modules 20 are typically arranged in formations to draw in as much air as possible. FIG. 1 shows a variety of clean air flow paths (dashed arrows) that lead back to an inlet of DAC modules 20. As noted, re-entry or re-circulation of clean air into DAC modules 20 diminishes the efficiency of DAC modules 20 because a large amount of the air they inlet is already clean air, i.e., air that has already passed through one or more DAC modules 20. It has been discovered that the re-entry of the air is caused by the arrangements of DAC modules 20 and the movement of air over, under and around the sides of DAC modules 20 that allows the clean air to pass, possibly repeatedly, to the inlet side of DAC modules 20. For example, as shown in FIG. 1, DAC modules 20 have contactors 24 and fans 26 raised above surface 28, i.e., the ground or a foundation, within frame 22 by a height H so clean air can flow thereunder. As shown in FIGS. 2-3, DAC modules 20 have spaces 30 therebetween through which clean air can pass back to the inlet sides thereof. As shown in FIG. 1, clean air can also pass over DAC modules 20 and back to the inlet side thereof.

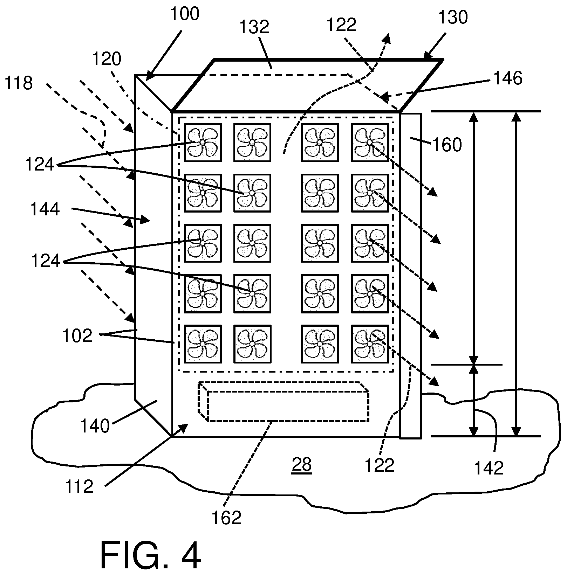

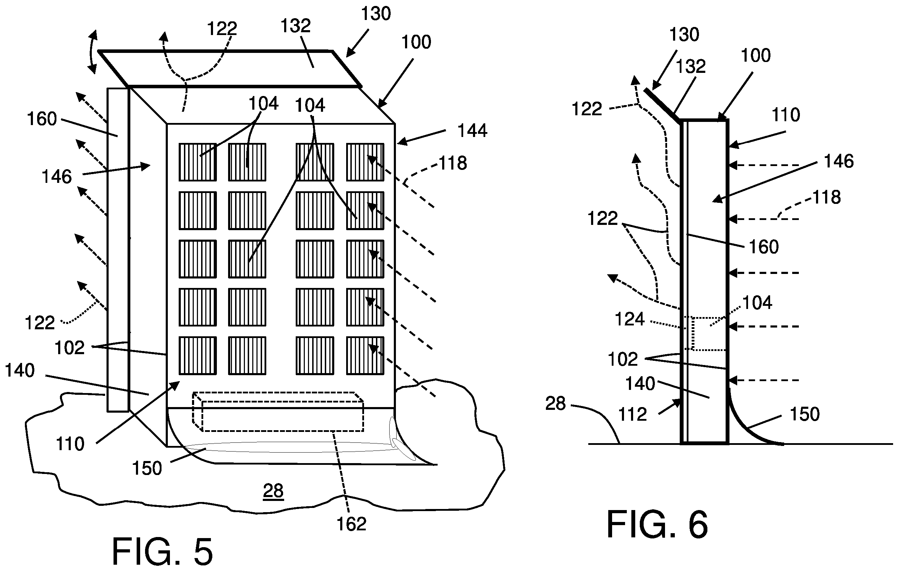

FIG. 4 shows a front perspective view, FIG. 5 shows a rear perspective view and FIG. 6 shows an end schematic view of a direct air capture (DAC) module 100 according to embodiments of the disclosure. Referring to FIGS. 4-6, DAC module 100 includes a frame 102 enclosing a plurality of hazardous gas capture contactors 104 (FIG. 5 only). Frame 102 may include any now known or later developed form of structural framing elements coupled to provide support to the rest of DAC modules. Frame 102 may enclose and/or support contactors 104. Hazardous gas capture contactors 104 (hereafter "contactors 104") may include any now known or later developed gas adsorption structure and materials configured to remove the desired hazardous gas. As used herein, "hazardous gas" may include any gas that is unwanted in the air. In one non-limiting example, contactors 104 may include parallel metal plates coated with a hazardous gas absorbing material. For carbon dioxide, the absorbing material may include but is not limited to: silica, metal oxides, zeolites, alumina, metal organic frameworks (MOFs), amine-based materials, polymers and/or carbon materials such as graphite, graphene, fullerene, activated carbon, hydrochar, carbon nanotubes and/or biochar. For purposes of description, DAC module 100 may be described as configured to remove carbon dioxide from air; however, it will be recognized that DAC modules 100, may be configured to remove other forms of contaminants from air such as but not limited to carbon monoxide (CO), nitrous oxide (NOx), sulfur oxide (SOx), chlorofluorocarbons (CFCs), particulates, and hydrocarbons. Contactors 104 may use alternative structure and/or absorbing material depending on the hazardous gas targeted for removal. As the structure and form of these alternatives are generally known, no further details are provided so the reader can focus on the salient points of the disclosure.

DAC module 100 and, more particularly, frame 102, includes an inlet side 110 through which dirty (i.e., unprocessed) air 118 (arrows) enters DAC module 100, and an outlet side 112 from which clean air 122 (arrows) exits DAC module 100. DAC module 100 also includes an air mover 120 configured to draw dirty air 118 into inlet side 110 of frame 102 and over contactors 104 to remove hazardous gas from dirty air 118, producing clean air 122. As used herein, "clean air" 122 indicates air that has been processed by DAC module 100 to remove any contaminants for which DAC module 100 is configured to remove hazardous gas, e.g., carbon dioxide, and thus includes less of that contaminant that "dirty air" 118 entering DAC module 100. For context purposes only, in one non-limiting example, dirty air may include approximately 400 parts per million (ppm) carbon dioxide, and clean air 122 may include approximately 60 ppm carbon dioxide. Air mover 120 may include any now known or later developed system to move air. In the non-limiting example shown, air mover 120 includes a plurality of fans 124 (FIG. 4, one schematically shown in FIG. 6) spaced downstream of contactors 104 (FIG. 5, one schematically shown in FIG. 6). Fans 124 may include any now known or later developed industrial fan configured to move a gas stream. Note, DAC module 100 does not include fans 124 in sides 144, 146 of frame 102 as in prior art DAC module 20 (FIG. 1) to prevent directing clean air 122 upstream toward inlet side 110 and needlessly causing re-entry and recirculation of clean air 122.

DAC module 100 also includes a flow director 130 operatively coupled to frame 102 and configured to direct clean air 122 exiting outlet side 112 of frame 102 away from frame 102 to reduce re-entry of clean air 122 into inlet side 110 of frame 102. In certain embodiments, shown in FIGS. 4-6, flow director 130 includes a flow guide member 132 extending from outlet side 112 of frame 102. In certain embodiments, flow guide member 132 extends out over outlet side 112 of frame 102. Flow guide member 132 may include any planar or curved member that is capable of directing clean air 122 from going over the top of frame 102 toward inlet side 110. Flow guide member 132 may be coupled to frame 102 in any known manner, e.g., welding, fasteners, etc., and may include any necessary supporting framework, e.g., support struts (not shown), required to position them as desired. Flow guide member 132 may be positioned at any angle desired to direct clean air 122. For example, flow guide member 132 may be angled to direct clean air 122 exiting outlet side 112 away from frame 102 and eventually vertically away from frame 102. The angle may be selected based on a number of factors such as but not limited to: distance from adjacent DAC module 100; air flow rate; anticipated air environmental conditions such as temperature range, barometric pressure range, humidity range; and/or size of DAC module 100 (e.g., height, width). In one non-limiting example, flow guide member 132 may have an angle in a range of 110°-170° relative to a top of frame 102. As shown in FIG. 5, an angle of flow guide member 132 may be adjustable (see double ended curved arrow) to accommodate different situations. Any now known or later developed mechanism to pivotally coupled flow guide member 132 to frame 102 and provide manual or automatic rotation of the member relative to frame 102 may be used.

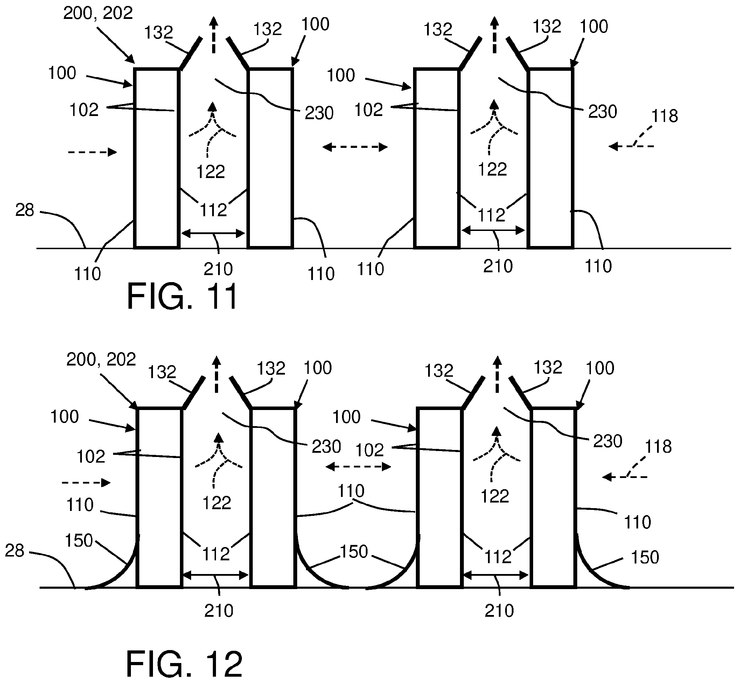

As will be described further herein, flow guide member 132 may have a length extending from frame 102 and angle configured to cooperate with a flow guide member 132 of an adjacent DAC module 100 (not in FIGS. 5-6, see FIGS. 11-12) to direct clean air 122 away from over the top of frames 102 of the adjacent DAC modules 100. More particularly, flow guide member 132 may be configured to interact with another flow guide member 132 of an adjacent DAC module 100 to accelerate a flow of clean air therebetween (see high-velocity passage 230 (FIGS. 11-12)) to direct clean air 122 exiting outlet side 112 of frames 102 vertically away from frames 102 to reduce re-entry of clean air 122 into inlet side 110 of frames 102. Flow guide member(s) 132 may extend any desired distance along a width of frame 102 but, in most cases, extend an entire width of frame 102.

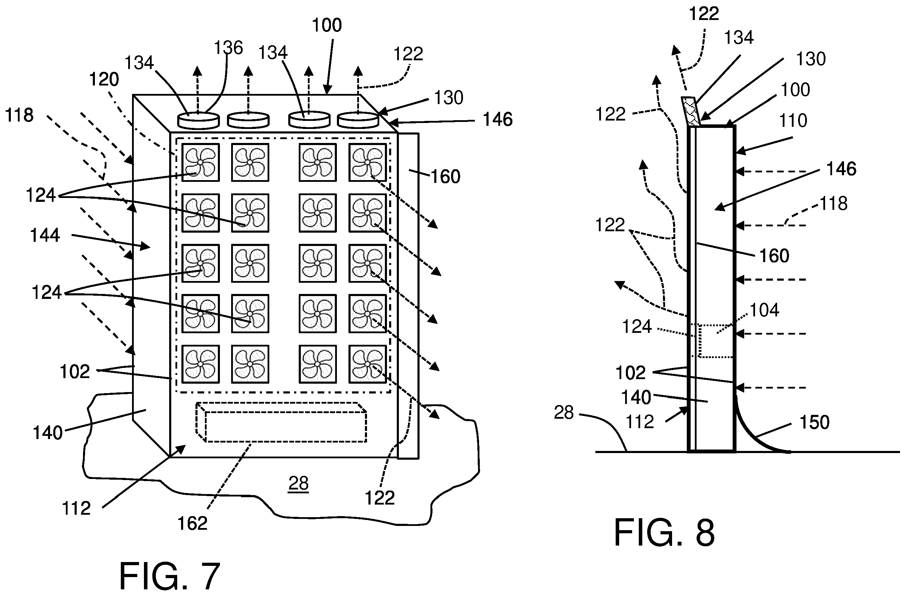

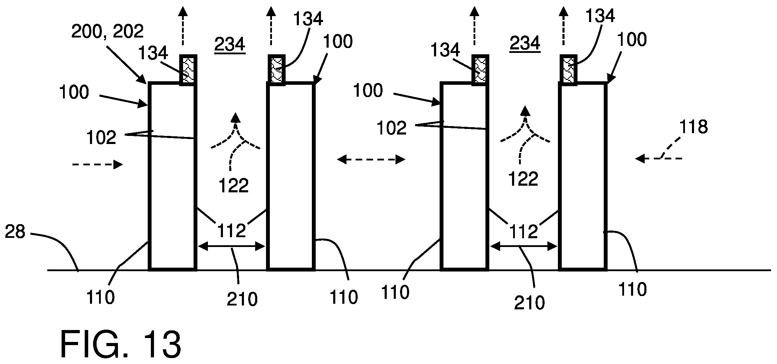

FIG. 7 shows a front perspective view and FIG. 8 shows an end schematic view of a direct air capture (DAC) module 100 according to other embodiments of the disclosure. DAC module 100 in FIGS. 7-8 includes a flow director 130 operatively coupled to frame 102 and configured to direct clean air 122 exiting outlet side 112 of frame 102 away from frame 102 to reduce re-entry of clean air 122 into inlet side 110 of frame 102. In these embodiments, flow director 130 includes at least one air mover 134 having a flow direction away from frame 102 to reduce re-entry of clean air 122 into inlet side 110 of frame 102. In the example shown in FIG. 7, four air movers 134 are shown, but any number (i.e., one, two, three or more than four) may be employed. In the non-limiting example shown, each air mover 134 may include a fan 136. Fan(s) 136 are also spaced downstream of contactors 104 and may assist in drawing dirty air 118 into DAC modules 100. Fan(s) 136 may include any now known or later developed industrial fan configured to move a gas stream and may be similarly structured as fans 124 (FIG. 4) of air mover 120. As will be further described, air mover(s) 134 may be configured to interact with air mover(s) 134 of an adjacent DAC module 100 to form a low-pressure area 234 (FIG. 13) therebetween to draw and direct clean air 122 exiting outlet side 112 of frames 102 vertically away from frames 102 to reduce re-entry of clean air 122 into inlet side 110 of frames 102. Air mover(s) 134 may be aimed in any desired direction such as but not limited to: vertically relative to surface 28, as shown in FIG. 7, or out over outlet side 112 of frame 102, as shown in FIG. 8. In the former case, air mover(s) 134 direct clean air 122 exiting outlet side 112 of frame 102 vertically away from frame 102. In the latter case, air mover(s) 134 direct clean air 122 not necessarily vertically, but generally vertical but also away from inlet sides 110 of DAC module(s) 100. In any case, flow director 130 reduces re-entry of clean air 122 into inlet side 110 of frame 102 of DAC modules 100.

In prior art DAC module 20, as shown in FIG. 1, contactors 24 and fans 26 are raised above surface 28, i.e., the ground or a foundation, within frame 22 by a height H, i.e., contactors 24 and fans 26 are on stilts. The raised arrangement allows air flowing above the ground to avoid entraining dust or other debris and directing it into DAC module 20. However, it has been discovered that the open nature of DAC module 20 allows air to flow upstream and to re-enter the inlet side of DAC module 20, reducing the module's efficiency. In order to address this issue, referring to FIG. 4, DAC module 100 according to embodiments of the disclosure may further include an exterior wall 140 enclosing a lowermost portion 142 of frame 102 and preventing air flow therethrough, i.e., forming a skirting around lowermost portion 142 of frame 102. As shown, exterior wall 140 extends from surface 28 upon which frame 102 is supported such that little to no air passes between surface 28 and a lower end of exterior wall 140. Exterior wall 140 may extend vertically up to a lower extent of air mover 120 and/or contactors 104 (FIG. 5). Exterior wall 140 may be on inlet side 110 only, or as shown, on inlet side 110 and sides 144, 146 of frame 102. In any case, exterior wall 140 prevent clean air 122 from moving upstream under frame 102 of DAC module 100.

In another embodiments, as shown in FIGS. 5 and 6, DAC module 100 may also include a curved ramp 150 extending from surface 28 upon which frame 102 is supported toward (and along) inlet side 110 of frame 102. Curved ramp 150 directs dirty air 118 flow drawn by air mover 120 along inlet side 110 of frame 102 and prevents debris from surface 28 from entering frame 102 and/or under frame 102. Curved ramp 150 may be used with or without exterior wall 140 or may form a part of exterior wall 140. Curved ramp 150 may have any curvilinear shape configured to mate with surface 28 and inlet side 110 at its ends. Curved ramp 150 may extend vertically up to a lower extent of air mover 120 and/or contactors 104 on inlet side 110 of frame 102.

As shown in FIGS, 4, 5 and 7, DAC module 100 may also include a gap filler member 160 extending from a side (144 as shown) of frame 102. Gap filler member 160 is configured to couple to frame 102 of DAC module 100 and couple to frame 102 of an adjacent DAC module 100 to block air flow between the DAC modules. Gap filler member 160 may include any planar or curved member that is capable of blocking clean air 122 from going between adjacent DAC modules 100. Gap filler member 160 may have a width sufficient to span any gap between adjacent DAC modules 100, and a length extending from surface 28 to an upper extent of a respective DAC module 100, e.g., the frame 102 thereof. Gap filler member 160 is shown extending adjacent an outlet side 112 of frame 102; however, it may alternatively be located adjacent inlet side 110 of frame 102.

DAC modules 100 can have any size depending on their intended capacity. Contactors 104 and air movers 120, 134 can be sized accordingly. In one non-limiting example, DAC modules 100 can have an overall height in a range of 12 to 25 meters, with each fan 124 and corresponding contactor 104 being approximately 1.5 to 4 meters high. In one non-limiting example, DAC modules 100 can have a depth, i.e., from inlet side 110 to outlet side 112, in a range of approximately 2 to 8 meters, and a width, i.e., from side 144 to side 146, in a range of approximately 10 to 18 meters. Other dimensions may also be possible.

As shown in FIGS. 4, 5, and 7, DAC module 100 can also optionally include any now known or later developed cleaner system 162. Cleaner system 162 can include any desired pumps (e.g., for water or heat transfer fluid); vacuum pumps (e.g., for evacuation of debris); and/or heaters, condensers and related conduits for cleaning contactors 104. As the process of cleaning DAC modules 100 is known in the art, no further details are required.

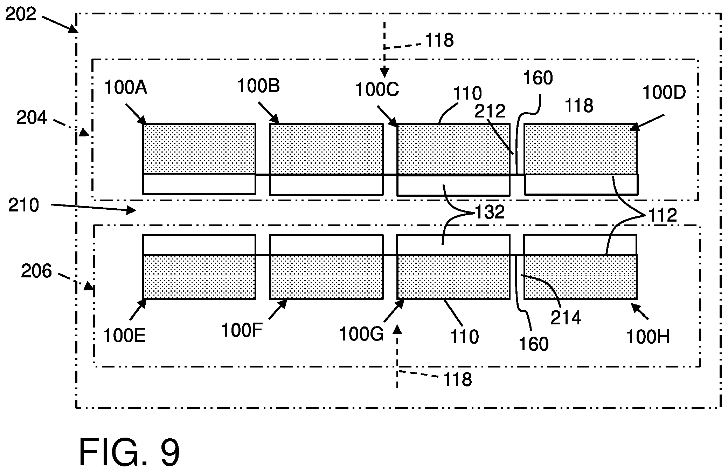

Referring to FIGS. 9-14, a DAC system 200 according to embodiments of the disclosure is shown. DAC system 200 includes at least one set 202 of direct air capture (DAC) modules 100. (Note, FIGS. 9-10 show systems 200 or sets 202 within dashed boxes for reference purposes only, the systems are open to the environment - there are no enclosures around systems 200 or sets 202). FIG. 9 shows an illustrative set 202 including DAC modules 100 as shown in FIG. 4, i.e., with flow guide members 132. It is emphasized that while four DAC modules 100 are shown in each set 202, any number of DAC modules 100 may be in set 202. While DAC modules 100 of the FIG. 4 variety are shown in FIG. 9, any embodiment of DAC module 100 described herein may be used to form a set 202. Further, the different embodiments of DAC module 100 described herein can be mixed and matched within a given set 202.

As shown in FIG. 9, each set 202 includes a first plurality 204 of DAC modules 100A-D arranged in a first line, and a second plurality 206 of DAC modules 100E-H arranged in a second line. The first line of DAC modules 100A-D is parallel to the second line of DAC modules 100EH, so as to form a space 210 between facing outlet sides 112 thereof, i.e., and outlet space 210. As shown, a gap filler member 160 couples to sides of pairs of adjacent DAC modules 100. Gap filler members 160 thus block clean air flow through a gap or space 212 between each pair of adjacent DAC modules, e.g., 100A-B, 100B-C, 100C-D, in first plurality of DAC modules 100A-D and through a gap or space 214 between each pair of adjacent DAC modules, e.g., 100E-F, 100F-G, 100G-H, in second plurality of DAC modules 100E-H. Only one of spaces 212, 214 and gap filler member 160 are labeled in FIG. 9 for clarity purposes. Gap filler members 160 block clean air 122 flow through a gap or space 212, 214 and prevent clean air 122 from moving between DC modules 100A-D and 100E-H to re-enter inlet side 110 of the DAC modules.

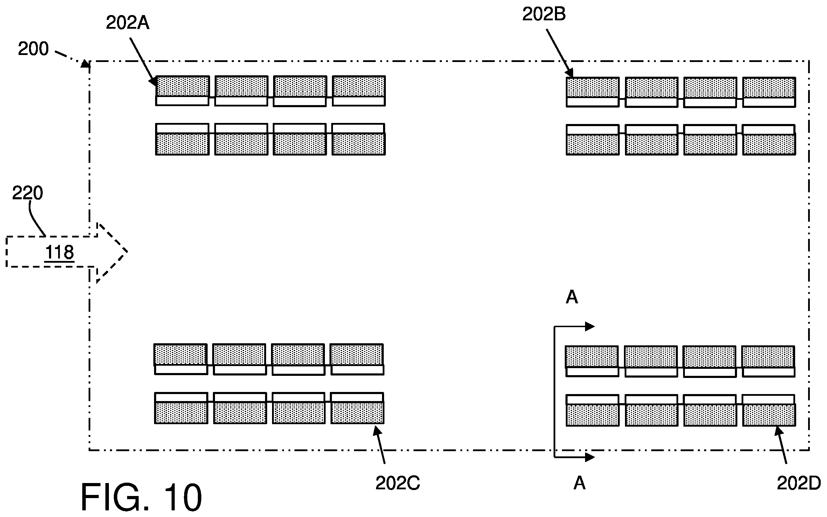

FIG. 10 shows a DAC system 200 including at least two sets 202 arranged in parallel lines, i.e., lengthwise. In FIG. 10, four sets 202A-D are shown with set 202A parallel to set 202C and set 202B parallel to set 202D. It is emphasized that while four sets 202A-D are shown, any number of sets 202 can be used in a given DAC system 200. In certain embodiment, the at least two sets 202A, C and 202B, D arranged in parallel lines are also arranged to be substantially parallel to a predominate wind direction 220 in a location of the at least two sets 202A, C; 202B, D. In the example shown, predominate wind direction 220 is left-to-right on the page of FIG. 10. In certain embodiments, "substantially parallel" may mean +/- 30°; in another embodiment, "substantially parallel" may mean +/- 20°; in another embodiment, "substantially parallel" may mean +/- 10°; and in another embodiment, "substantially parallel" may mean +/- 5°. It has been discovered that when DAC modules 100, including the structures described herein and arranged as described herein, and with the predominate wind direction 220 substantially parallel to sets 202, the system advantageously results in increased circulation without increasing re-entry of clean air 122 to inlet sides 110 of DAC modules 100. System 200 also reduces the vortex effect on clean air 122 and reduces the pressure differences across DAC modules 100. In certain embodiments, this arrangement may result in less than 10% of incoming air, i.e., dirty air 118, entering DAC modules 100 to recirculate to the DAC modules. In additional embodiments, this arrangement may result in less than 4% of incoming air, i.e., dirty air 118, entering DAC modules 100 to recirculate to the DAC modules.

FIG. 11 shows an end schematic side view of DAC system 200 including sets 202 of a plurality of DAC modules 100 of FIG. 4. (FIGS. 11-13 show end schematic views generally along view line A-A in FIG. 10, but with different versions of DAC module 100). In one non-limiting example, outlet space 210 may have a distance, i.e., from inlet sides 110 of facing DAC modules 100A, E; 100B, F; 100D, G; and 100D, H, in a range of 40-80 meters. In another non-limiting example, outlet space 210 have a distance of approximately 60 meters. In this latter case, flow guide members 132 may extend from outlet side 112 of DAC modules 100 a distance in a range of 1-10 meters. FIG. 12 shows an end schematic side view of DAC system 200 including sets 202 of a plurality of DAC modules of FIGS. 5-6, and FIG. 13 shows an end schematic side view of a DAC system including sets of a plurality of DAC modules of FIGS. 7-8.

Referring to FIG. 11, in operation, dirty air 118 enters inlet side 110 of each DAC module and is processed to remove hazardous gas, e.g., by absorption to contactors 104 (FIG. 5), in a manner understood in the art. Clean air 122 exits outlet side 112 of each DAC module 110 into outlet space 210. As shown in FIGS. 4 and 5, exterior wall 140 prevents clean air 122 from flowing under DAC modules 100 to inlet side 110, thus preventing re-entry of clean air 122 along that path into DAC modules 100. As shown in FIGS. 9 and 10, gap filler members 160 prevent clean air 122 from flowing between DAC modules 100 and back to inlet side 110 thereof. In addition, flow guide members 132 of facing DAC modules 100 accelerate a flow of clean air (see high-velocity passage 230 (FIGS. 11-12) that draws out and directs clean air 122 vertically away from DAC modules 100 to prevent clean air 122 from flowing over the top of DAC modules 100 to inlet sides 110 thereof. High-velocity passage 230 accelerates clean air 122 away from DAC modules with a force greater than would be present without flow guide members 132. The FIG. 12 embodiment works similar to the FIG. 11 embodiment, except curved ramps 150 also direct dirty air 118 flow drawn by air mover 120 (FIG. 7) along inlet sides 110 of frames 102 of DAC modules 100 and prevent debris from surface 28 from entering frame 102 and/or under frame 102. As noted, curved ramps 150 may be used with or without exterior wall 140 (FIGS. 4-5, not in FIGS. 11-13 for clarity). Alternatively, curved ramps 150 may form a part of exterior wall 140.

FIG. 13 shows an embodiment including air movers 134 rather than flow guide members 132 (FIGS. 11-12). Air mover(s) 134 on a particular DAC module 100 may be configured to interact with air mover(s) 134 of an adjacent DAC module 100 to form a low-pressure area 234 therebetween to draw and direct clean air 122 exiting outlet sides 112 of frames 102 vertically away from frames 102 and prevent flow of clean air 122 over the tops of DAC modules 100 to reduce re-entry of clean air 122 into inlet side 110 of frames 102. Air mover(s) 134 may be aimed in any desired direction such as but not limited to: vertically relative to surface 28, as shown in FIGS. 7 and 13, or out over outlet side 112 of frame 102, as shown in FIG. 8. In the former case, flow director 130 directs clean air 122 exiting outlet side 112 of frame 102 vertically away from frame 102. In the latter case, air mover(s) 134 may force clean air 122 not necessarily vertically, but away from outlet side 112. In either case, air mover(s) 134 reduce re-entry of clean air 122 over the top of DAC modules 100 and into inlet side 110 of frames 102 of DAC modules 100.

Embodiments of the disclosure provide various technical and commercial advantages, examples of which are discussed herein. DAC systems 200 according to embodiments of the disclosure can capture, for example, 1 million tons of carbon dioxide from the atmosphere while maintaining a maximum of 10% (and possibly less than 4%) recirculation value. More particularly, DAC system 200 and the different versions of DAC modules 100 described herein, reduce the vortex effect on clean air 122 and reduce the pressure differences across DAC modules 100. In addition, since DAC system 200 and DAC modules 100 are more efficient compared to prior art devices, less DAC modules 100 are necessary, resulting in a smaller overall footprint and a less costly DAC system 200. In addition to the efficiency gains described herein, the parallel arrangements of DAC modules 100 also makes maintenance easier because both sides of DAC modules 100 are accessible.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A direct air capture (DAC) module, comprising:
a frame enclosing a plurality of hazardous gas capture contactors;
a first air mover configured to draw air into an inlet side of the frame and over the plurality of hazardous gas capture contactors to remove hazardous gas from the air, producing clean air; and
a flow director operatively coupled to the frame and configured to direct the clean air exiting an outlet side of the frame away from the frame to reduce re-entry of the clean air into the inlet side of the frame.

2. The DAC module of claim 1, wherein the flow director includes a flow guide member extending from the outlet side of the frame.

3. The DAC module of claim 2, wherein the flow guide member is configured to interact with the flow guide member of an adjacent DAC module to accelerate a flow of clean air therebetween to direct the clean air exiting the outlet side of the frames vertically away from the frames to reduce re-entry of the clean air into the inlet side of the frame.

4. The DAC module of claim 1, wherein the flow director includes at least one second air mover having a flow direction away from the frame to reduce re-entry of the clean air into the inlet side of the frame.

5. The DAC module of claim 1, wherein the flow director directs the clean air exiting the outlet side of the frame vertically away from the frame.

6. The DAC module of claim 1, further comprising an exterior wall enclosing a lowermost portion of the frame and preventing air flow therethrough, the exterior wall extending from a surface upon which the frame is supported.

7. The DAC module of claim 1, further comprising a curved ramp extending from a surface upon which the frame is supported toward the inlet side of the frame, the curved ramp directing air flow drawn by the first air mover along the inlet side of the frame.

8. The DAC module of claim 1, further comprising a gap filler member extending from a side of the frame, the gap filler member configured to be coupled to the frame of an adjacent DAC module to block air flow between the DAC modules.

9. The DAC module of claim 1, wherein the hazardous gas includes carbon dioxide.

10. A direct air capture (DAC) system, comprising:
at least one set of direct air capture (DAC) modules, each set including:
a first plurality of DAC modules arranged in a first line;
a second plurality of DAC modules arranged in a second line, wherein the first line is parallel to the second line; and
a gap filler member blocking air flow through a space between each pair of adjacent DAC modules in the first plurality of DAC modules and through a space between each pair of adjacent DAC modules in the second plurality of DAC modules.

11. The DAC system of claim 10, wherein the at least one set includes at least two sets with the at least two sets arranged in parallel lines.

12. The DAC system of claim 11, wherein the at least two sets arranged in parallel lines are also arranged to be substantially parallel to a predominate wind direction in a location of the at least two sets.

13. The DAC system of claim 10, wherein each DAC module includes:
a frame enclosing a plurality of hazardous gas capture contactors; and
a first air mover configured to draw air into an inlet side of the frame and over the plurality of hazardous gas capture contactors to remove hazardous gas from the air, producing clean air.

14. The DAC system of claim 13, wherein each DAC module further includes a flow director operatively coupled to the frame and configured to direct the clean air exiting an outlet side away from the frame to reduce re-entry of the clean air into the inlet side of the frame.

15. The DAC system of claim 14, wherein the flow director includes a flow guide member extending from the outlet side of the frame, wherein the flow guide member is configured to interact with the flow guide member of an adjacent DAC module to accelerate a flow of clean air therebetween to direct the clean air exiting the outlet side of the frames vertically away from the frames to reduce re-entry of the clean air into the inlet side of the frames.
